## Europäisches Patentamt
## European Patent Office
## Office européen des brevets

(19)

(11) Veröffentlichungsnummer: **0 112 272**
**B1**

(12) **EUROPÄISCHE PATENTSCHRIFT**

(45) Veröffentlichungstag der Patentschrift:
01.06.88

(51) Int. Cl.⁴: **F 28 F 3/12**

(21) Anmeldenummer: **83710081.7**

(22) Anmeldetag: **25.11.83**

(54) **Bauelement und Verfahren zu seiner Herstellung.**

(30) Priorität: **16.12.82 DE 3246541**

(43) Veröffentlichungstag der Anmeldung:
**27.06.84 Patentblatt 84/26**

(45) Bekanntmachung des Hinweises auf die Patenterteilung:
**01.06.88 Patentblatt 88/22**

(84) Benannte Vertragsstaaten:
**AT BE CH FR GB IT LI NL SE**

(56) Entgegenhaltungen:
**DE - A - 2 228 926**
**DE - A - 2 638 815**
**FR - A - 2 369 514**
**FR - A - 2 406 166**
**GB - A - 650 134**
**GB - A - 1 505 831**
**US - A - 3 212 948**

(73) Patentinhaber: **Hering, Reinhard Friedrich, Via Albaredo 34, CH-6645 Brione S.M. (CH)**

(72) Erfinder: **Hering, Reinhard Friedrich, Via Albaredo 34, CH-6645 Brione S.M. (CH)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung geht aus von einem als Platte oder Formkörper ausgebildeten Bauelement mit den im Oberbegriff des Anspruchs 1 angegebenen Merkmalen. Es wird auch ein Verfahren zur Herstellung solcher Formkörper aufgezeigt, welches auf ein Verfahren mit den im Oberbegriff des Anspruchs 8 angegebenen Merkmalen aufbaut.

Ein solches Bauelement und ein entsprechendes Verfahren zu seiner Herstellung ist aus der EP-A-9053 bekannt. Dabei liegt die Aufgabe zugrunde, witterungsbeständige Platten oder Formkörper aus lignozellulosehaltigen Fasern, Holzwerkstoffen beliebiger Art, wie z.B. Holzspänen, Holzfasern usw. oder aus anderweitig aufbereiteten Rohstoffen zu schaffen, die eine bestmögliche Feuchteresistenz, eine unlösbare und preisgünstige Oberflächenbeschichtung, eine Witterungs- und Alterungsbeständigkeit sowie eine hohe Abrieb-, Verschleiss- und Schlagfestigkeit aufweisen und in einem einzigen Verfahrensgang hergestellt werden können. Dabei wird aus den eingesetzten Partikeln ein Rohkörper insbesondere durch Streuung gebildet, der vor der Heisspressung auf seiner Ober- und/oder Unterseite mit einer Beschichtung aus vulkanisierbaren elastomeren Stoffen, wie Natur- und/oder Synthesekautschuk o.dgl. versehen wird, worauf die Heisspressung unter Verbindung des so entstandenen Grundkörpers mit der Beschichtung und das gleichzeitige Ausvulkanisieren der Beschichtung erfolgen. Auf diese Art und Weise ist es möglich, nicht nur plattenförmige Bauelemente herzustellen, sondern auch solche Bauelemente, bei denen der Formkörper mit Vertiefungen versehen ist, während der Grundkörper über seine Erstreckung eine durchgehende Materialstärke aufweist. Auch die AT-A-155 378 beschreibt schon ganz allgemein Holzplatten für Möbel- und Bautischler, die u.a. mit Gummi beschichtet werden können.

Die DE-A-2 228 926 zeigt ein Verfahren zur Herstellung von beschichteten Platten. Dabei wird zunächst ein Rohkörper aus mit Bindemittel versetzten Spänen gestreut und in der üblichen Art und Weise zu einer durch Heisspressen erzeugten Spanplatte umgeformt. Dieser so gebildete und bereits ausgehärtete Grundkörper wird mit einem Kunstharz durchtränkten Holzfaservlies und einer Kunststoffabdeckfolie belegt und gemeinsam einem zweiten Heisspressvorgang unterworfen, wobei über das Holzfaservlies einerseits die Verbindung zu der Kunststoffabdeckfolie und andererseits zu der ausgehärteten Spanplatte hergestellt wird. Die bereits ausgehärtete Spanplatte bekommt auf diese Art und Weise eine Beschichtung.

Darüberhinaus sind in den letzten Jahren vermehrt Einrichtungen bekanntgeworden, welche die Nutzung einstrahlender Sonnenwärme zum Ziel haben. So beschreibt die DE-A-2 638 815 z.B. Schaumstoffplatten mit eingeformten Kanälen, die mit aufgeklebten Überzügen aus Kunststoffbahnen abgedichtet und beschichtet sind und darüber durch ebenfalls aufgeklebte wärmeleitfähige Bleche aus Aluminium oder Kupfer abgedeckt sind. Auch die DE-A-2 536 687 geht von Schaumstoff als Basismaterial aus, in das nachträglich aus Kunststoff-Halbzeug tiefgezogene Fluidkanäle einmontiert und über einem Luftzwischenraum durch strahlungsdurchlässige Platten abgedeckt werden. Durch die DE-A-2 811 829 wird weiterhin ein Dachbelag bekanntgemacht, der aus einzeln produzierten Träger-, Isolier- und Deckschichten zusammengesetzt ist, in die Flüssigkeits-Kreislaufleitungen aus Metall eingebettet sind. Die GB-A-2 031 141 schliesslich beschreibt aus Aluminiumblech mit eingepressten Kanälen sowie transparenter Abdeckung und tragendem Schaumstoffkern zusammengesetzte Solarplatten und die US-A-4 164 933 hat Zementplatten mit eingegossenen mäanderförmig verlaufenden Rohrleitungen zum Inhalt, die im Aussenbau als Kollektoren sowie im Gebäudeinnern als Heizelemente eingesetzt werden können.

Die AT-A-371 586 sowie die FR-A-2 369 514 zeigen Energiewandler zum Umsetzen der Sonnenenergie in Wärmeenergie, wobei dachziegelförmige Elemente und körperlich getrennt, jedoch einander zugeordnete Energiewandler eingesetzt werden. In den dachziegelförmigen Elementen sind Rohrleitungsstücke eingebettet. Die Energiewandler bestehen beispielsweise aus Kunststoffformkörpern, die grabenförmigen Vertiefungen aufweisen, die mit einer eingesetzten Glasplatte abgedeckt sind. Diese Energiewandler werden auf die Anschlüsse in den dachziegelförmigen Elementen auf- bzw. eingesteckt. Eine solche, grundsätzlich mehrteilig ausgebildete Energieumwandlungseinrichtung ist entsprechend aufwendig gestaltet und lässt sich darüberhinaus nur im Dachbereich anwenden.

Die bisherige Herstellung solcher zumeist aus vielen Rohrabschnitten, Einzellamellen o.dgl. zusammengesetzter Kollektoren, Heiz- oder Kühlkörper erfordert einen hohen Aufwand an Material und eine Vielzahl von Arbeitsoperationen, die sie zu einem teuren, schweren und in formaler Hinsicht meist unbefriedigenden Produkt machen, dessen endgültige Montage erhebliche Arbeit und Kosten verursacht. Aber auch dort, wo die Heiz- oder Kühleinrichtungen z.B. als Fussboden- oder Deckenheizungen bzw. als Dach- oder Aussenwandkollektoren in das Bauwerk integriert sind, ist der Fertigungs- und Kostenaufwand nicht geringer.

Der Erfindung liegt daher die Aufgabe zugrunde, ein Bauelement der eingangs beschriebenen Art so weiterzubilden, dass es als Wärmetauscher eingesetzt werden kann, in einfachster Weise als einstückiges Bauelement hergestellt werden kann und vielfältige Anwendungsmöglichkeiten eröffnet.

Erfindungsgemäss wird dies dadurch erreicht, dass der mit der Beschichtung versehene Grundkörper grabenförmig eingepresste Vertiefungen aufweist, die durch eine die Vertiefungen zu einem oder mehreren Hohlleitern schliessende Deckschicht überspannt sind, und dass die Deckschicht in Flächenbereichen neben den Vertiefungen fest mit der Beschichtung verbunden ist. Ein solches Bauelement bzw. ein solcher Formkörper weist somit einen Grundkörper mit Trage- und in der Regel auch mit Isolierfunktion auf, mit dem sowohl eine Beschichtung wie auch eine Deckschicht dauerhaft verbunden sind, wobei zwischen der Beschichtung und der Deckschicht die Hohlleiter gebildet werden, die in Vertiefungen in dem Grundkörper zumindest teilweise plaziert sind. Bei dem erfindungsgemässen Bauelement sind im Gegensatz zum Gegenstand der EP-A-9053, bei welchem eine gleichmässige Materialstärke vorliegt, im Bereich der Vertiefungen und den übrigen Bereichen des Grundkörpers unterschiedlich geschichtete Zonen erkennbar. Solche Elemente, die zugleich neben ihrer Trage- oder Abdeckfunktion auch als Wärmetauscher benutzbar sind, müssen bei ihrer Montage lediglich noch aneinander angeschlossen werden, ohne dass zusätzliche tragende Bauelemente erforderlich sind. Die Hohlleiter sind damit integriert in dem Bauelement, wobei sie nicht aus eingebetteten Rohren oder sonstigen Teilen bestehen, sondern direkt aus der Beschichtung und der Deckschicht gebildet sind. Solche Bauelemente mit integriertem Hohlleiter können mit zirkulierenden flüssigen oder gasförmigen Heiz- und/oder Kühlmedien betrieben werden. Sie können als Kollektoren für Sonnenenergie eingesetzt werden und dabei zugleich die Dacheindeckung, eine Fassadenverkleidung usw. bilden. Auch eine Verwendung als heizende und/oder kühlende Wand-, Fussboden- und Deckenplatten ist ohne weiteres möglich.

Wenn auch noch die Deckschicht aus vulkanisierten, elastomeren Stoffen besteht, ergibt sich die Möglichkeit einer einwandfreien Verbindung zwischen Beschichtung und Deckschicht und zusätzlich der besondere Vorteil, dass solche Bauelemente durch einen einzigen Heisspressvorgang herstellbar sind. Die Deckschicht kann auch elastisch ausgebildet sein und durch Ausstülpung nach aussen so verformt werden, dass der Querschnitt der Vertiefungen zu dem Querschnitt der Hohlleiter etwa verdoppelt ist. Weitere vorteilhafte Weiterbildungen der Bauelemente sind Gegenstand weiterer Unteransprüche.

Ein besonders vorteilhaftes Verfahren zur Herstellung solcher Platten und anderer Formkörper kennzeichnet sich erfindungsgemäss dadurch, dass zur Bildung von Wärmetauschern mit integrierten Hohlleitern vor oder bei der Heisspressung in die Oberfläche des mit der Beschichtung versehenen Rohkörpers grabenförmige Vertiefungen eingepresst werden, dass der mit der Beschichtung versehene Rohkörper mit einer Deckschicht abgedeckt wird, und dass die Deckschicht in Flächenbereichen fest mit der Beschichtung verbunden wird. Auch damit wird ein einstückiges Bauelement geschaffen, welches mit sehr geringem Aufwand herstellbar ist. Die Hohlleiter werden nicht eingebettet, sondern während der Herstellung aus Bestandteilen geformt und gebildet. Der mit der Beschichtung versehene und in der Regel gestreute Rohkörper wird örtlich zur Bildung der grabenförmigen Vertiefungen verformt, wobei ein Grundkörper mit über seine Erstreckung variierendem Querschnitt entsteht, bei dem gleichsam die Hälfte der Hohlleiter bereits an Ort und Stelle plaziert und ausgebildet ist, so dass nur noch die Deckschicht erforderlich ist, um die Hohlleiter nach der anderen Seite abzuschliessen. Auch diese Deckschicht wird fest mit der Beschichtung verbunden und damit Bestandteil des Formkörpers.

Ein Herstellungsverfahren, welches nur einen einzigen Heisspressvorgang erfordert und daher besonders kostengünstig durchführbar ist, kennzeichnet sich dadurch, dass vor der Heisspressung nach der Aufbringung der Beschichtung ein Trennmittel entsprechend der Abmessung, Form und Plazierung der Hohlleiter und sodann eine elastische Deckschicht aufgebracht werden, und dass bei der anschliessenden Heisspressung die Vertiefungen eingebracht werden. Damit wird zugleich auch eine innige dauerhafte Verbindung zwischen den Bestandteilen erreicht. Es ist aber auch möglich, dass in den mit der Beschichtung versehenen Rohkörper vor dem Aufbringen der Deckschicht die grabenförmigen Vertiefungen durch Heisspressen eingebracht werden, und dass anschliessend die Deckschicht aufgebracht und in den Flächenbereichen fest mit der Beschichtung verbunden wird.

Derart hergestellte, vorwiegend plattenförmige, aber auch als ziegel- oder kassettenförmige Formkörper auszubildende Bauelemente sind in der nachfolgenden Beschreibung anhand der beigefügten Zeichnungen erläutert, und zwar zeigen:

Figuren 1 bis 4 schematische Darstellungen über Aufbau und Anwendung solcher Bauelemente,

Figur 5 einen Schnitt zweier mit einem integrierten Hohlleiter verbundener Bauelemente,

Figur 6 eine Schnittdarstellung durch eine andere Ausführungsform des Bauelements und

Figuren 7 bis 9 Schemazeichnungen zur Demonstration eines Herstellungsverfahrens der Bauelemente.

Im Prinzip sind die Bauelemente folgendermassen aufgebaut:

Die Oberfläche des die Formstabilität bewirkenden und thermisch möglichst gut isolierenden Grundkörpers 1 enthält den Verlauf der Hohlleiter als Vertiefungen 2 mit z.B. halbkreisförmigem Querschnitt und ist im ganzen mit einer dieser Verformung des Grundkörpers 1 folgenden und fest an ihm haftenden Beschichtung 3 aus einem elastomeren, vulkanisationsfähigen Material überzogen, das beständig gegenüber den infragekommenden Heiz- bzw. Kühlmedien und für diese undurchlässig ist. Eine weitere, darüberliegende Deckschicht 4 aus demselben oder einem anderen in gleicher Weise beständigen und dichten Stoff, der die Vertiefungen überspannt und in den angrenzenden glattflächigen Flächenbereichen 5 mit der elastomeren Beschichtung 3 des Grundkörpers 1 z.B. durch Vulkanisation, Verklebung usw. fest und dicht verbunden ist, bildet den äusseren Abschluss des Bauelements und vervollständigt die Vertiefungen 2 zum kompletten Hohlleiter 7. Diese Deckschicht 4 kann entweder weich und elastisch sein, als auch, evtl. in Verbindung damit, aus stabilem sowie begeh- und belastbarem Material bestehen. Sie sollte die Ein- und Abstrahlung begünstigen oder besonders gute wärmeleitende oder -verteilende Eigenschaften haben, wie sie z.B. Metallfolien und Bleche aufweisen. Sie kann Armierungen enthalten, mit oder ohne spezielle Filterwirkung transparent sein sowie bedarfsweise bei der Herstellung oder nachträglich am Einsatzort mit zusätzlichem Boden- oder Wandbelag, Kunstharzverputz oder anderen, z.B. dekorativ gestalteten Oberflächen versehen sein.

Eine vor allem herstelltechnisch vorteilhafte Variante solcher Bauelemente, die allerdings keine harten und strapazierbaren Aussenflächen erbringt, jedoch z.B. für Dacheindeckungen mit integriertem Kollektor geeignet ist, ergibt sich bei folgendem Aufbau: dem stabilen und isolierenden Grundkörper 1 sind, den Vertiefungen 2 und Leitungsführung folgend, statt nur einer zwei getrennte elastomere Schichten als Beschichtung 3 und Deckschicht 4 aufvulkanisiert, die sich infolge eines vorher analog zur Leitungsführung aufgebrachten Trennmittels nur im, zwischen und neben den Leitungen befindlichen Flächenbereichen miteinander verbunden haben und sich zu einem Hohlleiter öffnen, sobald sie mit Heiz- oder Kühlmedien gefüllt werden. Die Leitungsführung ist danach in ihrem halben Querschnitt als plastische Erhebung auf der Oberfläche erkennbar. Auch hierfür kann u.U. transparentes und evtl. gewebe- oder faserarmiertes Material eingesetzt werden, um Strahlendurchlässigkeit oder die Stabilität zu erhöhen.

Jedes Bauelement bzw. jeder Leitungsabschnitt ist generell an den Stellen des Zu- oder Abflusses mit ebenfalls integrierten Anschlussbuchsen versehen, um z.B. mit Hilfe von Rohr- oder Schlauchverbindungen einzelne Bauelemente sowohl zu Gruppen zusammen- als auch an ein zentrales Versorgungssystem anschliessen zu können.

Verfahren zur Herstellung dieser Bauelemente mit integriertem Hohlleiter gehen in erster Linie von der Verwendung von Rohstoffen aus, die sich im Heisspressverfahren verformen, verfestigen und miteinander verbinden lassen. Unter dieser Voraussetzung kann das zuerst beschriebene Bauelement in zwei aufeinanderfolgenden Pressprozessen beispielsweise folgendermassen produziert werden: eine Mischung von mit Bindemitteln versetzten Partikeln und/oder Fasern und/oder Spänen wie z.B. Holz-, Mineral-, Glasfasern usw. wird, bedeckt mit einer Beschichtung aus noch unvulkanisiertem Kautschuk bzw. anderen vulkanisierbaren Elastomeren, in einer Heisspresse, die entweder selbst oder als beigelegtes Pressblech die erhabene Negativform von Verlauf und Querschnitt des späteren Hohlleiters enthält, unter Einwirkung von Druck, Zeit und Temperatur gemeinsam verpresst. Diesem Zwischenprodukt, jetzt einseitig mit einer fest haftenden auf- und aus- oder zumindest anvulkanisierten Kautschukschicht und der vertieften Leitungsführung versehen, wird, ggf. nach dem Einsetzen von Anschlussbuchsen für die spätere Zu- und Ableitung, sodann in einem weiteren Arbeitsgang die eigentliche Deckschicht aufgepresst. Sie kann entweder lediglich aus einer evtl. armierten gleichartigen oder ähnlichen Kautschukschicht oder, mit ihr oder ohne sie als verbindende Zwischenlage, aus Blechen (Gummi-Metall-Verbindung) und/oder anderen durch den Einsatzzweck bestimmten Materialien bestehen und mit dem ersten Pressling im Bereich der zwischen und neben den Leitungen liegenden Partien z.B. durch erneute Vulkanisation oder Verschweissen, Verkleben u.dgl. verbunden werden. Damit ist dann das plattenförmige oder dreidimensional verformte Bauelement bereits fertig und einsatzbereit für Verlegung oder Montage am Bau.

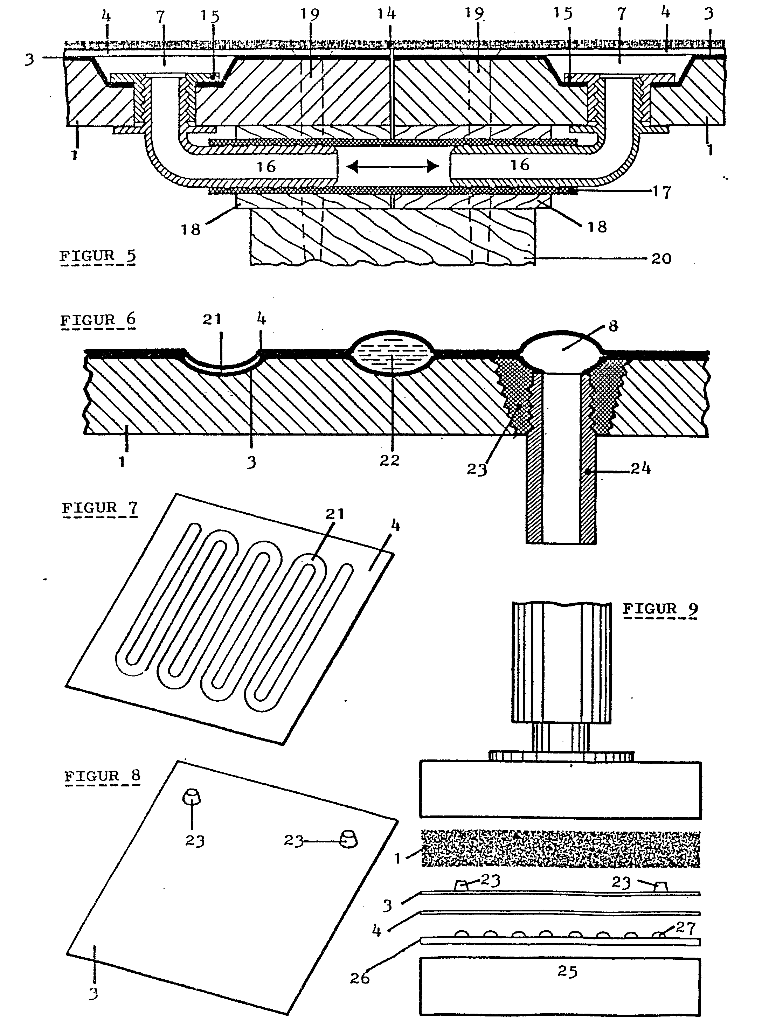

Wenn auf eine hart, begeh- und belastbare Aussenschicht verzichtet werden kann, lässt sich ein solches Bauelement mit integriertem Hohlleiter sogar in einem einzigen Pressprozess herstellen. Der unverdichteten, mit Bindemitteln versetzten Partikel-Späne-Fasermischung wird zunächst wiederum eine zweckmässigerweise folienförmige Beschichtung 3 noch unvulkanisierten elastomeren Materials aufgelegt, die auf ihrer dem Grundkörper 1 zugekehrten Seite bereits angearbeitete Anschlusspartien für spätere Zu- und Ableitungen enthalten kann. Auf sie wird dann eine Deckschicht 4 ebenfalls vulkanisierbaren Materials gelegt, das auf seiner nach innen gekehrten Seite mit einem Trennmittel 21 (Figur 6) beschichtet ist, welches in Form und Plazierung dem Verlauf des vorgesehenen Hohlleiters 7 entspricht. Dieser ist als erhabenes Negativ entweder Teil des Presswerkzeugs oder eines eingelegten Pressblechs. Während des nun folgenden Heisspressprozesses wird das Material des Grundkörpers 1 verdichtet und erhält durch Aushärten des Bindemittels seine Stabilität. Gleichzeitig wird die Beschichtung 3 mit dem Grundkörper 1 ganzflächig, mit der äusseren Deckschicht 4 jedoch nur dort durch Vulkanisation verbunden, wo das dazwischen befindliche Trennmittel 21 dies nicht verhindert. Der die Presse verlassende Formkörper ist jetzt auf seiner Oberfläche mit einer fest haftenden und im Leitungsverlauf jedoch noch vertieften doppelten Kautschukbeschichtung versehen, die sich zum eigentlichen Hohlleiter 7 öffnet und ausstülpt, sobald sich ein flüssiges oder gasförmiges Medium darin befindet und bewegt. Auch dieses Teil ist damit bereits fertig und für Montage und Verlegung einsatzbereit. Zumindest die äussere Deckschicht soll und kann aus einer zugleich witterungsbeständigen Kautschukmischung bestehen und möglichst Eigenschaften aufweisen, die – je nach Einsatzzweck – die Temperaturein- oder -abstrahlung begünstigen. Selbstverständlich können die hier geschilderten Produktionsabläufe um zusätzliche Prozesse erweitert werden. Zudem kann die Verwendung anderer, z.B. tiefziehfähiger Materialien zu anderen Techniken der Beschichtung oder Hohlleiterauskleidung und Zusammenfügung führen.

Nach welchen der hier nur im Prinzip dargestellten Verfahren solche Bauelemente mit integriertem Hohlleiter auch produziert werden können, ihr Vorzug gegenüber allen herkömmlichen
Lösungen liegt

1. in der Möglichkeit, sehr grossflächige Elemente herzustellen;

2. das Material des Grundkörpers durch Stoffwahl, Dichte und Schichtdicke zugleich als in fast
allen Fällen erforderliche thermische Isolation zu
nutzen;

3. in der sehr einfachen und aussergewöhnlich
billigen Herstellbarkeit durch den Einsatz kostengünstiger Materialien und auf wenige Operationen beschränkbare Produktionsprozesse;

4. in der Doppelfunktion dieser Bauelemente,
die Dachkollektor und Dachdeckung, Wandkollektor und Fassadenverkleidung, Wandverschalung
und Heizkörper sowie tragende Bodenplatte und
Fussbodenheizung zugleich sein können.

Die Bauelemente können, wenn sie z.B. als
Kollektoren die Umgebungswärme oder Sonneneinstrahlung nutzbar machen sollen, als ebene
Dachplatten oder grossformatig ziegelartig ausgebildet sein. Weiterhin können sie in Form ebener Platten ganz- oder teilflächig als Aussenwandverschalungen sowie zweckmässig gestaltet als
Fassadenelemente vorgehängt und zu grösseren
Funktionseinheiten zusammengeschlossen werden. Auch als sog. Energiezäune sind sie denkbar,
entweder in Plattenform oder aus koppelbaren
Einzelelementen bestehend.

Im Gebäudeinnern lassen sie sich in erster Linie zum Heizen und/oder Kühlen von Räumlichkeiten einsetzen. Ebenfalls entweder plattenförmig oder als ggf. dekorativ gestaltete Bauelemente in Form von Wandpaneelen, Deckenkassetten
usw., können sie als Fussbodenheizung verlegt,
als Deckenheizung abgehängt oder als Wandheizkörper ganz- oder teilflächig und u.U. sogar so
eingebaut werden, dass ihre Funktion äusserlich
gar nicht mehr erkennbar ist. Anschlüsse, Verbindungen und Regelelemente können sich unsichtbar, z.B. im Bereich der Scheuerleiste, befinden.
Nach demselben Herstellverfahren und jeweils
gleichartig gestaltet lassen sich darüberhinaus
Blindelemente ohne Leitungen schaffen, die z.B.
Dacheindeckungen, Fassaden, Innenwände und
Decken formal überall dort ergänzen können, wo
die sammelnden, wärmenden oder kühlenden
Funktionseinheiten nur partiell zum Einsatz kommen.

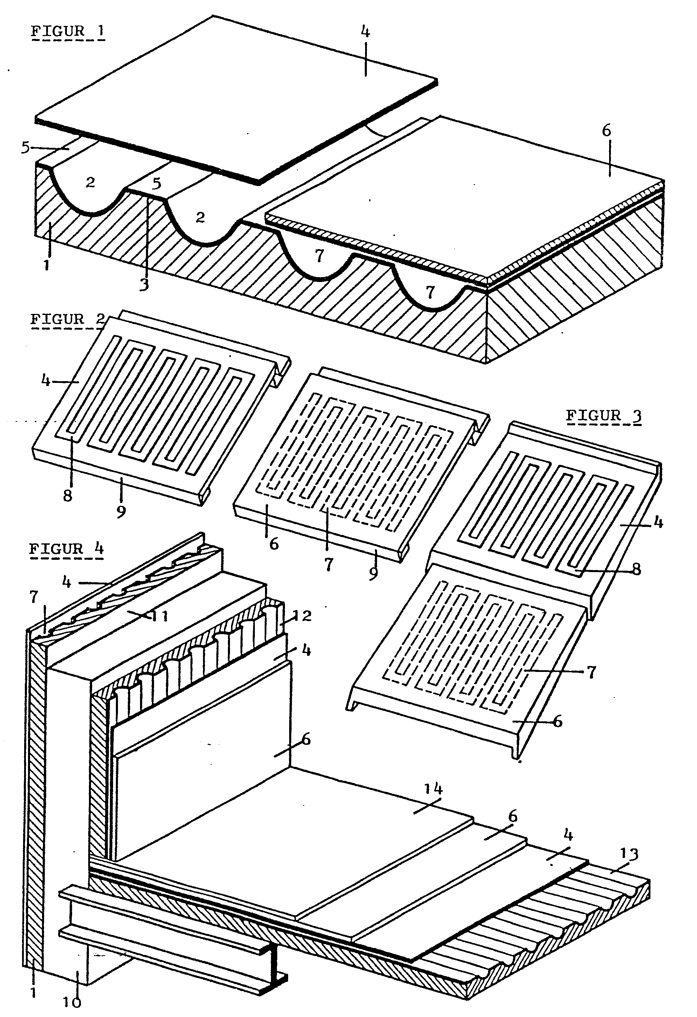

Die Figur 1 zeigt den Aufbau eines Bauelements
mit integriertem Hohlleiter 7 auf. Der formstabile
und nach Möglichkeit zugleich thermisch isolierende Grundkörper 1 ist einseitig ganzflächig und
zugleich in den Vertiefungen 2 der Leitungen mit
einer fest haftenden Beschichtung 3 aus heiz-
bzw. kühlmedienbeständigem und -dichtem Material überzogen. Eine Deckschicht 4 aus demselben
oder einem anderen geeigneten Material, das
sich im Bereich der zwischen und neben dem
Leitungssystem befindlichen Flächenbereichen 5
mit der Beschichtung 3 fest und dicht verbinden
lässt, schliesst das Bauelement entweder allein oder in Verbindung mit einem zusätzlichen Belag
6 derart ab, dass unter ihr Hohlleiter 7 gebildet
werden.

In Figur 2 ist links ein Dachplattenabschnitt dargestellt, auf dessen witterungsbeständiger, elastischer Deckschicht 4 sich plastisch erhaben die
obere Hälfte des Querschnitts 8 abzeichnet. Die
Deckschicht 4 ist zugleich entlang der Kante 9
schützend wirksam. Rechts ein ähnlicher Dachplattenabschnitt, bei dem die Hohlleiter 7 jedoch
von dem Belag 6 verdeckt sind.

Figur 3 zeigt ziegelförmige Dachelemente. Bei
dem oberen ist der halbe Querschnitt 8 des Hohlleiters 7 als erhabenes Profil in und auf der Deckschicht 4 sichtbar, während bei dem unteren der
gesamte Hohlleiter 7 unter dem Belag 6 liegt.

In Figur 4 ist ein Anwendungs- und Anordnungsbeispiel der Bauelemente wiedergegeben. Bei
dem als Fassadenplatte vor eine Aussenmauer 10
gehängten Kollektor 11 werden die in den isolierenden Grundkörper 1 eingeformten Hohlleiter 7
nach aussen lediglich durch eine einzige Deckschicht 4, z.B. aus Aluminiumblech, abgeschlossen.

Ein ähnliches Bauelement an der Innenseite der
Aussenmauer 10 fungiert als Heizkörper 12, dessen abstrahlende Deckschicht 4 einen zusätzlichen, z.B. dekorativen Belag 6 erhalten hat.

Bei dem als Fussbodenheizung eingesetzten
Formkörper 13 sind die Hohlleiter 7 zunächst mit
einer zugleich als verbindendes Medium wirkenden elastischen Deckschicht 4, dann einem harten, begehbaren Belag 6 und nachträglich noch
einem zusätzlichen weichen Belag, z.B. einem
Teppichboden 14, abgedeckt.

Schliesslich ist in Figur 5 ein Montagebeispiel
für die Leitungsverbindung von zwei Fussbodenheizungsplatten wiedergegeben. In die halbfertigen, zunächst nur mit der Beschichtung 3 versehenen Fussbodenheizungsplatten sind in die im
Anschlussbereich verbreiterten Hohlleiter 7 vor
dem Aufbringen der in diesem Falle harten und
begehbaren Deckschichten 4 Anschlussbuchsen
15 eingesetzt. In sie sind von unten her das Anschlusssystem zugleich abdichtende, gekrümmte
Anschlussstutzen 16 geschraubt, die ihrerseits
wieder durch ein Schlauchstück 17 miteinander
verbunden sind. Diese Verbindung führt durch
Ausnehmungen in Auflageleisten 18. Vor Auflegen
des Teppichbodens 14 sind die Platten mit Schrauben 19 auf einem Träger 20 befestigt worden.

Figur 6 zeigt einen Schnitt durch den Teilabschnitt eines in einem Arbeitsgang herstellbaren
Bauelements mit integriertem Hohlleiter. Auf den
Grundkörper 1 wurde bei dem formgebenden
Pressprozess zugleich eine Beschichtung 3 und
eine Deckschicht 4 auf- und ausvulkanisiert. Im
Leitungsbereich, wo diese beiden Schichten infolge eines vorher aufgebrachten Trennmittels 21
keine Verbindung miteinander eingehen konnten,
öffnen sie sich nach Einfüllen des Heiz- bzw. Kühlmediums 22 zum Querschnitt 8 des Hohlleiters 7.
In eine miteingepresste Anschlussbuchse 23, z.B.
aus Hartgummi, ist ein Schlauchanschlussstutzen
24 eingeschraubt.

Figur 7 zeigt eine Ansicht der Deckschicht 4 mit dem entsprechend dem Verlauf der Hohlleiter aufgebrachten Trennmittel 21, Figur 8 eine Unteransicht der Beschichtung 3 mit den beiden eingepressten Anschlussbuchsen 23 und Figur 9 die Materialanordnung in der Heisspresse für einen einstufigen Herstellprozess. Über einem Pressentisch 25 befindet sich ein Pressblech 26 mit einer Negativform 27 des späteren Hohlleiters. Die Deckschicht 4 ist auf ihrer Oberseite bereichsweise mit Trennmittel 21 versehen. Es folgt die Beschichtung 3 mit den Anschlussbuchsen 23 und, noch unverdichtet, die mit Bindemittel versetzte Partikel-Faser-Spänemischung für den Grundkörper 1.

**Patentansprüche**

1. Als Platte oder Formkörper ausgebildetes Bauelement, welches einen Grundkörper aus mit Bindemittel versetzten Partikeln, wie z.B. Fasern oder Spänen oder anderweitig aufbereiteten Rohstoffen, sowie auf Ober- und/oder Unterseite eine Beschichtung aus vulkanisierten elastomeren Stoffen, wie Natur- und/oder Synthesekautschuk o.dgl., aufweist, wobei der Grundkörper (1) und die Beschichtung (3) innig miteinander verbunden sind, dadurch gekennzeichnet, dass der mit der Beschichtung (3) versehene Grundkörper (1) grabenförmig eingepresste Vertiefungen (2) aufweist, die durch eine die Vertiefungen (2) zu einem oder mehreren Hohlleitern (7) schliessende Deckschicht (4) überspannt sind, und dass die Deckschicht (4) in Flächenbereichen (5) neben den Vertiefungen (2) fest mit der Beschichtung (3) verbunden ist.

2. Bauelement nach Anspruch 1, dadurch gekennzeichnet, dass die Deckschicht (4) aus vulkanisierten, elastomeren Stoffen besteht.

3. Bauelement nach Anspruch 1 oder 2, dadurch gekennzeichnet, dass die Deckschicht (4) elastisch ausgebildet ist und durch Ausstülpung nach aussen geformt ist, so dass der Querschnitt der Vertiefungen (2) zu dem Querschnitt der Hohlleiter (7) etwa verdoppelt ist.

4. Bauelement nach Anspruch 1 bis 3, dadurch gekennzeichnet, dass die Wärmeleitfähigkeit der Deckschicht (4) bzw. eines weiteren Belags (6) durch eingebettete Metallpartikel erhöht ist.

5. Bauelement nach einem der Ansprüche 1 bis 4, dadurch gekennzeichnet, dass die Deckschicht (4) bzw. der Belag (6) transparent ausgebildet sind.

6. Verfahren zur Herstellung von Platten und anderen Formkörpern, die einen Grundkörper (1) aus mit Bindemittel versetzten Partikeln, wie z.B. Fasern oder Spänen oder anderweitig aufbereiteten Rohstoffen, sowie auf Ober- und/oder Unterseite eine Beschichtung (3) aufweisen, wobei die unverpressten oder vorverpressten Partikel zu einem Rohkörper geformt sind, der vor einer Heisspressung mit der Beschichtung (3) aus vulkanisierbaren elastomeren Stoffen, wie Natur- und/oder Synthesekautschuk o.dgl., versehen wird, worauf Rohkörper und Beschichtung (3) gemeinsam heissverpresst werden und dabei die Formgebung des Formkörpers (13) erfolgt sowie die Beschichtung (3) mit dem Grundkörper (1) verbunden und am Formkörper vulkanisiert wird, dadurch gekennzeichnet, dass zur Bildung von Wärmetauschern mit integrierten Hohlleitern (7) vor oder bei der Heisspressung in die Oberfläche des mit der Beschichtung (3) versehenen Rohkörpers grabenförmige Vertiefungen (2) eingepresst werden, dass der mit der Beschichtung (3) versehene Rohkörper mit einer Deckschicht (4) abgedeckt wird, und dass die Deckschicht (4) in Flächenbereichen (5) fest mit der Beschichtung (3) verbunden wird.

7. Verfahren nach Anspruch 6, dadurch gekennzeichnet, dass vor der Heisspressung nach der Aufbringung der Beschichtung (3) ein Trennmittel (21) entsprechend der Abmessung, Form und Plazierung der Hohlleiter (7) und sodann eine elastische Deckschicht (4) aufgebracht werden, und dass bei der anschliessenden Heisspressung die Vertiefungen (2) eingebracht werden.

8. Verfahren nach Anspruch 6, dadurch gekennzeichnet, dass in den mit der Beschichtung (3) versehenen Rohkörper vor dem Aufbringen der Deckschicht (4) die grabenförmigen Vertiefungen (2) durch Heisspressen eingebracht werden, und dass anschliessend die Deckschicht (4) aufgebracht und in den Flächenbereichen (5) fest mit der Beschichtung (3) verbunden wird.

**Claims**

1. Building element which is configured as a slab, or as a moulded body, this building element comprising a base body which is composed of particles that have been blended with a binding agent, examples of such particles being fibres or chips, or particulate raw materials that have been prepared in other ways, and further comprising an upper-surface coating and/or an undersurface coating, in every case composed of vulcanized elastomeric substances such as natural rubber and/or synthetic rubber, or substances of a similar nature, the base body (1) and the coating (3) being intimately bonded to each other, characterized in that the coated base body (1) exhibits impressed trough-shaped depressions (2) that are spanned by a facing layer (4) which closes them so as to form one or more hollow conduits (7), and in that the facing layer (4) is securely bonded to the coating (3) in surface regions (5) beside the depressions (2).

2. Building element according to Claim 1, characterized in that the facing layer (4) is composed of vulcanized elastomeric substances.

3. Building element according to Claim 1 or 2, characterized in that the facing layer (4) is designed to be resilient, and is shaped by outward protrusion, so that the cross-section of the hollow conduits (7) is approximately double that of the depressions (2).

4. Building element according to Claims 1 to 3, characterized in that the thermal conductivity of the facing layer (4) is increased by embedded metal particles, as is that of any additional covering (6).

5. Building element according to any one of Claims 1 to 4, characterized in that the facing layer (4) is designed to be transparent, as is the covering (6), if provided.

6. Process for the manufacture of slabs and other moulded bodies, these products comprising a base body (1) which is composed of particles that have been blended with a binding agent, examples of such particles being fibres or chips, or particulate raw materials that have been prepared in other ways, and further comprising an upper-surface coating (3) and/or an undersurface coating, the unpressed or prepressed particles being formed into a raw body, to which the coating (3) is applied before a hot-pressing operation, this coating (3) being composed of elastomeric substances that can be vulcanized, such as natural rubber and/or synthetic rubber, or substances of a similar nature, whereupon the raw body and the coating (3) are hot-pressed together, and at the same time the moulded body (13) is given its shape and the coating (3) is bonded to the base body (1) and vulcanized to the moulded body, characterized in that, in order to form heat exchangers with integrated hollow conduits (7), trough-shaped depressions (2) are impressed into the surface of the coated raw body, this pressing step being performed before or during the hot-pressing operation, in that the coated raw body is covered with a facing layer (4), and in that the facing layer (4) is securely bonded to the coating (3) in surface regions (5).

7. Process according to Claim 6, characterized in that after the coating (3) has been applied, but before the hot-pressing operation, a release agent (21) is applied in a distribution corresponding to the dimensions, shape and positioning of the hollow conduits (7), and a resilient facing layer (4) is then applied, and in that the depressions (2) are impressed during the hot-pressing operation that follows.

8. Process according to Claim 6, characterized in that the trough-shaped depressions (2) are hot-pressed into the coated raw body before the facing layer (4) is applied, and in that the facing layer (4) is then applied and securely bonded to the coating (3) in the surface regions (5).

**Revendications**

1. Elément de construction formant une plaque ou un corps moulé et présentant un corps de base, fait de particules imprégnées de liant, comme par exemple des fibres, des copeaux ou des matières premières préparées autrement, ainsi qu'un revêtement placé sur le dessus et/ou le dessous et fait de matières élastomères vulcanisèes, comme du caoutchouc naturel et/ou synthétique ou analogue, le corps de base (1) et le revêtement (3) étant intimement unis, caractérisé en ce que le corps de base (1), muni du revêtement (3), présente des enfoncements (2) en forme de gorges, qui sont enfoncés à la presse, ces enfoncements étant couverts par une couche de couverture (4), qui les ferme en faisant de ceux-ci une ou plusieurs conduites creuses (7); et en ce que la couche de couverture (4) est fixée au revêtement (3) dans les zones superficielles (5), placées à côté des enfoncements (2).

2. Elément de construction suivant la revendication 1, caractérisé en ce que la couche de couverture (4) est en matières élastomères vulcanisées.

3. Elément de construction suivant la revendication 1 ou 2, caractérisé en ce que la couche de couverture (4) est élastique et qu'elle est formée vers l'extérieur par retroussement, de sorte que la section transversale des enfoncements (2) est environ doublée par rapport à celle des conduites creuses (7).

4. Elément de construction suivant les revendications 1 à 3, caractérisé en ce que la conductibilité thermique de la couche de couverture (4) et/ou d'une autre couche (6) est augmentée par des particules métalliques incorporées.

5. Elément de construction suivant une des revendications 1 à 4, caractérisé en ce que la couche de couverture (4) et/ou la couche (6) sont transparentes.

6. Procédé pour la fabrication de plaques et autres corps de moulage, qui comportent un corps de base (1), fait de particules imprégnées de liant, comme par exemple des fibres, des copeaux ou des matières premières préparées autrement ainsi qu'un revêtement (3) placé sur le dessus et/ou le dessous, les particules non pressées ou ayant subi un pressage d'ébauche étant moulées en un corps brut, qui reçoit, avant un pressage à chaud, le revêtement (3), fait de matières élastomères vulcanisables, comme du caoutchouc naturel et/ou synthétique ou analogue, après quoi le corps brut et le revêtement (3) étant pressés à chaud ensemble, le corps de moulage (13) recevant alors sa forme, le revêtement (3) étant lié au corps de base (1) et vulcanisé sur le corps de moulage, caractérisé en ce que, pour la formation d'échangeurs thermiques à conduites creuses (7) intégrées, avant ou pendant le pressage à chaud, des enfoncements (2) en forme de gorges sont pressés dans la surface du corps brut muni du revêtement (3); que ce corps brut ainsi muni du revêtement (3) est couvert d'une couche de couverture (4) et que celle-ci est fixée au revêtement (3), dans des zones superficielles (5).

7. Procédé suivant la revendication 6, caractérisé en ce qu'avant le pressage à chaud et après l'application du revêtement (3), suivant les dimensions, la forme et l'emplacement des conduites creuses, on applique un produit séparateur (21) et ensuite une couche élastique de couverture (4) et que, pendant le pressage à chaud qui suit, les enfoncements (2) sont formés.

8. Procédé suivant la revendication 6, caractérisé en ce que, dans le corps brut muni du revêtement (3), on forme, avant d'appliquer la couche de couverture (4), les enfoncements (2) en forme de gorges par pressage à chaud et qu'ensuite la couche de couverture (4) est appliquée et fixée au revêtement (3) dans les zones superficielles (5).

FIGUR 1

FIGUR 2

FIGUR 3

FIGUR 4

FIGUR 5

FIGUR 6

FIGUR 7

FIGUR 8

FIGUR 9

11